# FASCICULE DE BREVET EUROPEEN

(11) **EP 0 370 921 B1**
(45) Date de publication et mention de la délivrance du brevet: **15.06.1994**
(21) Numéro de dépôt: 89420411.4
(22) Date de dépôt: 25.10.1989
(51) Int. Cl.: H04B 3/54

(54) **Automate de gestion technique de bâtiment à ligne bifilaire de transmission de données d'énergie**
Automat zur technischen Verwaltung eines Gebäudes unter Verwendung einer Zweidrahtleitung zur Übertragung von Daten und Energie
Apparatus for technical control of a building using a two-wire data and power transmission line

(30) Priorité: 04.11.1988 FR 8815053
(43) Date de publication de la demande: 30.05.1990
(73) Titulaire: MERLIN GERIN, F-38240 Meylan (FR)
(72) Inventeur: Lhuillier, Henri, F-38050 Grenoble Cédex 9 (FR); Mertz, Jean-Luc, F-38050 Grenoble Cédex 9 (FR); Barthelemy, Patrick, F-38050 Grenoble Cédex 9 (FR); Segond, Corinne, F-38050 Grenoble Cédex 9 (FR)
(74) Mandataire: Ritzenthaler, Jacques

(56) Documents cités:
- CH-A- 643 095
- DE-A- 3 329 049
- PATENT ABSTRACTS OF JAPAN, vol. 7, no. 94 (E-171)[1239], 20 avril 1983 & JP-A-58 19 064
- IEEE INTERNATIONAL CONFERENCE ON CONSUMER ELECTRONICS, 1985, Lasalle, 5 juin 1985, pages 30-31, IEEE, New York, US; D.I. HARITON et al.: "AC power line modem for consumer and industrial environments"

## Description

L'invention est relative à un automate de gestion technique de bâtiment ayant plusieurs modules de réception et d'émission de données répartis dans le bâtiment, en particulier des modules capteurs, et/ou actionneurs et un module d'une unité centrale reliés entre eux par un réseau symétrique à deux fils de transmission de données binaires en mode asynchrone.

L'équipement technique des bâtiments est de plus en plus complexe et la gestion de certaines fonctions, tel que le chauffage ou l'éclairage est souvent automatisée. Les automates connus sont conçus pour une application ou une installation particulière et ils sont difficilement adaptables ou extensibles. Ils nécessitent des liaisons électriques multiples, souvent à l'origine d'incidents.

Il a déjà été proposé d'utiliser des automates programmables standards pour la gestion de bâtiments, mais ces systèmes élaborés et coûteux ne sont justifiés que dans le tertiaire et dans certains cas particuliers.

D'autres systèmes permettent de connecter une unité centrale à des modules actionneurs ou capteurs comme dans le document DE-A-3.329.049. Cependant ce système nécessite l'emploi d'une unité centrale dont le mode de réception et de transmission des informations est différent de celui des modules. En effet, la centrale informe les modules par une modulation de tension sur la ligne, et les modules répondant à la centrale par une modulation de courant. La différence des modes de transmission complique la gestion de la ligne. Un autre document, JP-A-58.19064, décrit un dispositif de transmission par court-circuit de la ligne, mais ne permet pas une modularité par la connexion de plusieurs modules émetteurs et récepteurs sur la ligne.

Le besoin se fait sentir de disposer d'un système de gestion de bâtiment pouvant être aisément mis en place, même dans des bâtiments existants, et qui peut assurer l'ensemble des commandes automatiques avec une grande souplesse d'adaptation, sans mettre en oeuvre des dispositifs compliqués et coûteux et des liaisons multiples par câbles.

L' automate selon la présente invention répond à ce besoin et est caractérisé en ce que, chaque module comportant un émetteur et un récepteur de données, il comprend un bloc d'alimentation relié audit réseau à deux fils pour alimenter en énergie lesdits modules raccordés audit réseau, ledit bloc d'alimentation comportant un générateur de tension limité en courant, les données binaires transmises par le réseau étant modulées à deux niveaux de tension électrique entre lesdits deux fils, le niveau bas de tension correspondant à une mise en court-circuit du réseau par l'un des modules en émission, et le niveau haut, permettant l'alimentation en énergie des modules, chaque module comportant un microprocesseur de commande connecté à l'émetteur et au récepteur du module de manière à écouter en permanence les messages transmis par ledit réseau à deux fils et à empêcher toute émission lorsque le réseau n'est pas libre.

Les capteurs et les appareils de l'automate, qui sont dispersés dans le bâtiment, sont reliés uniquement par un réseau ou ligne bifilaire qui assure à la fois la transmission de données et l'alimentation des modules. Chaque module dispose d'une adresse pour la réception et l'émission de mes sages. Un module capteur de température est par exemple agencé pour signaler le franchissement d'un seuil prédéterminé de température, tandis qu'un module télérupteur de commande d'éclairage reçoit les ordres d'allumage ou d'extinction des lampes. Chaque module surveille en permanence les signaux ou bits transmis par le réseau bifilaire ou bus, et sélectionne les messages le concernant. La liaison par deux fils est facile à réaliser même dans des bâtiments anciens et lorsque l'alimentation électrique des modules est, selon l'invention, assurée par le même réseau bifilaire, l'implantation de l'automate ne pose aucun problème.

L'état de repos est l'état normal le plus fréquent du réseau et le standard de transmission est choisi pour présenter à l'état de repos un niveau de courant permettant l'alimentation des modules. Cette alimentation est interrompue pendant les instants de mise en court-circuit du réseau et pour conserver l'alimentation de l'électronique des modules, ceux-ci disposent d'une réserve d'énergie, par exemple fournie par un condensateur.

L'alimentation de l'automate est incorporée à l'unité centrale de gestion ou tableau de bord, mais une séparation des deux fonctions est possible dans certaines applications particulières. Cette alimentation est un générateur de tension limité en courant, par exemple au double de la totalité de la consommation des modules pour provoquer lors d'une mise en court-circuit du réseau une chute de tension appropriée. La tension d'alimentation est par exemple de 15 Volts avec une limitation du courant de court-circuit à 300 mA. Le réseau est agencé de façon à obtenir lors d'une mise en court-circuit en un point quelconque une chute de tension en tout point au plus égale au quart de la tension d'alimentation. Généralement la longueur du réseau est suffisamment faible et cette contrainte ne pose guère de problèmes.

Selon un développement de l'invention, la consommation d'énergie est réduite par l'emploi de composants à faible consommation et par un état de veille des modules pendant les périodes de repos. Cet état de veille est interrompu par la réception d'un signal, par exemple le signal "start" d'un message et cycliquement pour exécuter les tâches attribuées au modules, notamment l'émission de messages. Les commandes de sortie sont avantageusement faites en impulsions et les capteurs sont en état de consommation uniquement pendant les périodes de lecture. Ces dispositions, qui ne sont pas forcément toutes utilisées en combinaison, contribuent à une réduction de la consommation d'énergie de l'automate permettant une structure de réseau simplifiée.

L'invention est applicable à un réseau, dont les modules ou certains des modules disposent d'une alimentation locale et ne sont donc pas alimentés par le réseau à deux fils. La fonction transmission du module reste alimentée par le réseau à deux fils, mais les autres fonctions, par exemple de mesure sont alimentées indépendamment avec une séparation galvanique, notamment opto-électronique du réseau à deux fils.

La modulation s'effectue par pincement de la ligne d'énergie constituée par le réseau bifilaire, avantageusement suivant le standard de transmission asynchrone à vitesse normalisée. Ce standard est choisi pour son côté universel et son état de repos correspond au niveau d'alimentation des modules. Son interfaçage est réduit.

Chaque module ne peut passer en émission que lorsque la ligne est libre, ce qui implique une écoute permanente et une inhibition de l'émission si un autre module émet déjà un message. Lorsque deux modules démarrent un message en même temps, l'un doit obligatoirement se retirer et selon l'invention, c'est le module qui émet le premier un bit à 0 correspondant à une mise en court-circuit de la ligne alors que l'autre émet un bit à 1, qui devient prioritaire. La priorité est donc établie sur le premier octet du message. En émission ou tout au moins en début d'émission, le module surveille l'état de la ligne lorsqu'il émet un bit à 1. Si à ce moment là, il voit que la ligne est forcée à 0 par une mise en court-circuit, c'est qu'un autre émetteur a démarré l'émission en même temps que lui et il se retire pour ne pas perturber le message de l'émetteur qui à émis le 0. L'émetteur qui s'est retiré, continue à écouter la ligne pour savoir à quel moment elle redevient libre et émettre alors son message. Le message devenu prioritaire n'est pas perturbé par l'autre message et il est inutile de le répéter, même si le destinataire est le module qui avait démarré l'émission simultanément.

Les modules de l'automate sont standards et ils sont personnalisés lors de leur association à un capteur ou actionneur par une programmation particulière. Ces programmes peuvent être plus ou moins standards, le même programme étant éventuellement utilisé pour tous les capteurs de température ou détecteurs d'intrusion du bâtiment. L'unité centrale ou tableau de bord permet une supervision et un contrôle de l'ensemble et elle comporte notamment des dispositifs d'affichage, de signalisation, de programmation et/ou de télécommande.

D'autres avantages et caractéristiques ressortiront plus clairement de la description qui va suivre de plusieurs modes de mise en oeuvre de l'invention donnés à titre d'exemples non limitatifs et représentés aux dessins annexés dans lesquels:
La figure 1 est une vue schématique d'un automate de gestion technique selon l'invention;
La figure 2 illustre un octet des messages de l'automate selon la figure 1;
La figure 3 illustre les messages envoyés simultanément par deux modules différents;
La figure 4 est une vue partielle de la figure 1, montrant l'alimentation d'un capteur;
La figure 5 est une vue schématique d'un capteur à propre courant d'un automate selon la figure 1;
La figure 6 représente un mode de réalisation particulier du bloc d'alimentation de l'automate selon la figure 1.

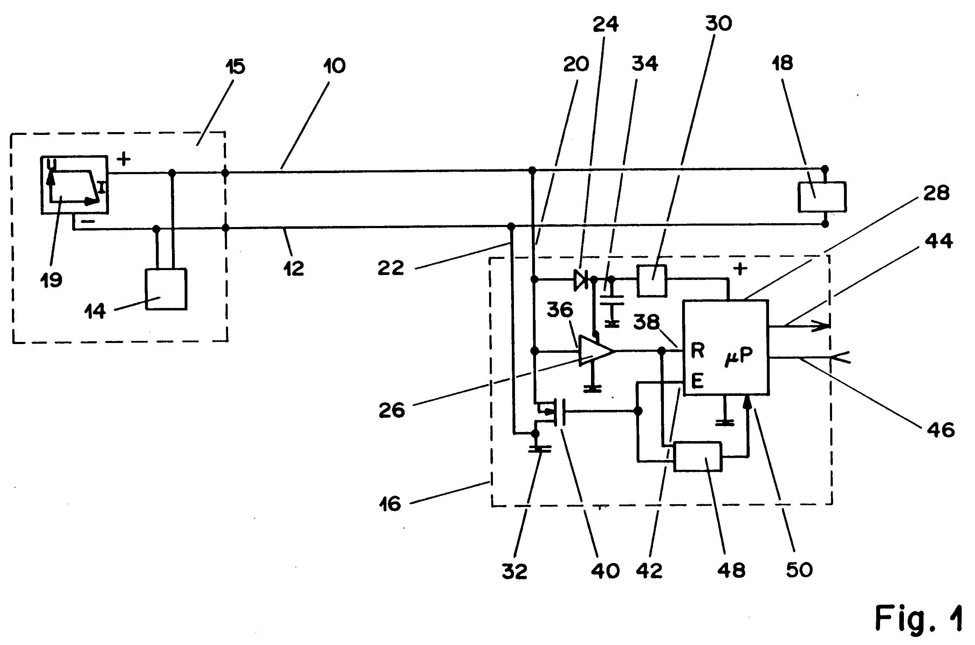

Sur la figure 1, un automate de gestion technique de bâtiment comprend un réseau de transmission de données à deux fils 10,12 reliant entre eux différents modules 14,16,18 et un module unité centrale 15. Les modules 14 à 18 dont le nombre peut bien entendu être quelconque, sont répartis dans le bâtiment et sont par exemple constitués par des sondes de température pilotant le chauffage du bâtiment, des actionneurs ou contacteurs de commande de moteur, tels que d'ouverture et de fermeture des volets ou de porte, des détecteurs de présence ou d'infraction etc... L'unité centrale 15 comporte un bloc d'alimentation 19 alimentant par les conducteurs 10,12 les différents modules 14,16,18. Le bloc d'alimentation est constitué par un générateur de tension fournissant une tension continue U prédéterminée, par exemple de 15 Volts, et il est limité en courant de manière à limiter le courant de court-circuit dans le réseau 10,12 à une valeur voisine du double du courant total d'alimentation des modules 14,16,18. Ce courant de court-circuit est par exemple voisin de 300 milliampères, mais selon les caractéristiques de l'automate il peut être notablement supérieur ou inférieur. La limitation en courant du bloc alimentation 19 est réalisée par tout moyen approprié.

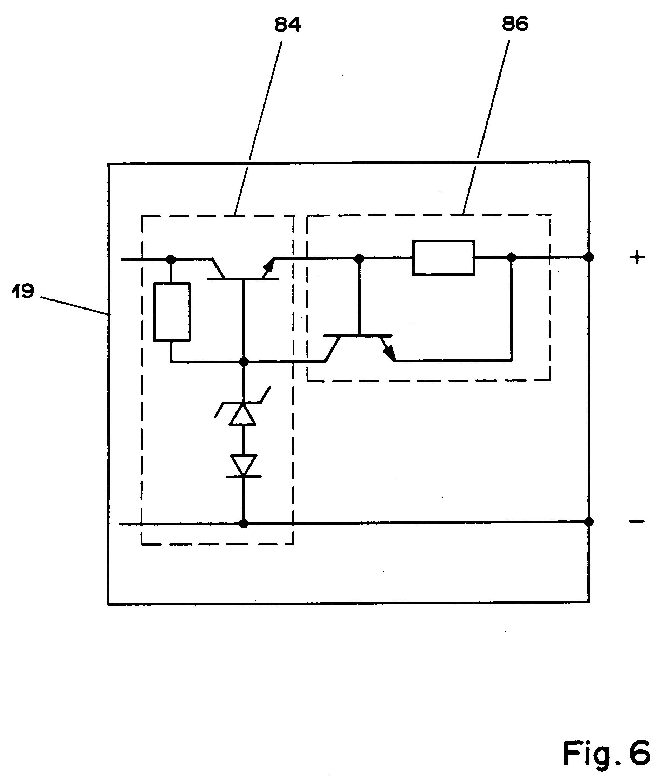

Un mode de réalisation particulier du bloc d'alimentation 19 est représenté sur la figure 6. Le bloc 19 comporte un régulateur de tension 84 alimenté par tout moyen approprié, de manière connue, et un limiteur de courant 86 disposé en aval du régulateur de tension 84 et destiné à limiter le courant de court-circuit à une valeur prédéterminée. Le bloc d'alimentation se comporte donc en générateur de tension fournissant au réseau une tension continue U fixe tant que le courant ne dépasse pas une certaine valeur, par exemple 250 mA. Lorsque le réseau est court-circuité la tension régulée chute brutalement, mais le limiteur de courant 86 intervient et limite le courant, l'ensemble se comportant alors en générateur de courant.

Les modules 14,16,18 sont tous identiques, et seul l'un d'entre eux 16 est décrit par la suite en détail. Le module 16 est relié par une liaison 20 au conducteur 10 et par une liaison 22 au conducteur 12. La liaison 20 alimente par l'intermédiaire d'une diode 24, d'une part un amplificateur 26 et d'autre part un microprocesseur 28 par l'intermédiaire d'un bloc d'adaptation 30. La liaison 22 est mise à la masse en 32 et un condensateur 34 de stockage d'énergie est relié à la sortie de la diode 24 et à la masse. La liaison 20 est reliée de plus à l'entrée 36 de l'amplificateur 26 fonctionnant en récepteur, et dont la sortie est reliée à un port 38 du microprocesseur 28. Un interrupteur 40, par exemple un semi-conducteur relié à un port 42 du microprocesseur 28, relie en position de fermeture les liaisons 20 et 22 en mettant en court-circuit les conducteurs 10 et 12. Le microprocesseur 28 comporte une ou plusieurs sorties 44, et une ou plusieurs entrées 46 respectivement de commande d'actionneurs tels que des interrupteurs télécommandés, et de réception de signaux de mesure, par exemple délivrés par des capteurs. Les ports 38 et 42 du microprocesseur 28 sont reliés à un bloc comparateur 48 qui compare à chaque instant les signaux présents sur ces deux ports et envoie un signal de collision à un port d'entrée 50 du microprocesseur 28. Chaque module 16 est capable d'émettre des signaux par la fermeture de l'interrupteur 40 et une mise en court-circuit des conducteurs 10,12, provoquant un pincement de la ligne constituée par ces deux conducteurs et une baisse de la tension à un niveau bas. La modulation s'effectue suivant le standard de transmission asynchrone à vitesse normalisée, dont l'état de repos correspond au niveau haut d'alimentation des modules 14,16,18. Le condensateur 34 est capable d'assurer l'alimentation du module pendant les moments où la ligne 10,12 est forcée à 0 par l'un des modules 14,16,18.

L'automate fonctionne de la manière suivante :
Au repos, le bloc d'alimentation 19 maintient la ligne 10,12 à un niveau de tension haut, par exemple de 15 Volts correspondant à un bit 1 des signaux numériques transmis par la ligne ou réseau 10,12. Les modules 14,16,18 sont alimentés par cette ligne 10,12 et les condensateurs 34 sont chargés. La transmission d'un message, par exemple par le module 16, est pilotée par son microprocesseur 28 qui provoque la fermeture de l'interrupteur 40 pour pincer la ligne 10,12 et la forcer à une tension voisine de 0 Volts, correspondant à un bit 0. Chaque message transmis par la ligne 10,12 comprend une adresse correspondant au module 14,16,18 concerné, et chaque module écoute en permanence les messages transmis par la ligne 10,12. Lorsque le microprocesseur 28 reconnait l'adresse associée à son module, il effectue les opérations correspondant au message reçu. Ces opérations sont transmises par les sorties 44 aux actionneurs ou aux capteurs commandés par le module. Le module unité centrale 15 ou tableau de bord, peut superviser le fonctionnement de l'automate et permettre une télécommande centralisée avec affichage ou réception des messages des différents modules. A cet effet l'unité centrale 15 est équipée d'un émetteur et récepteur analogue à celui-des modules 14,16,18.

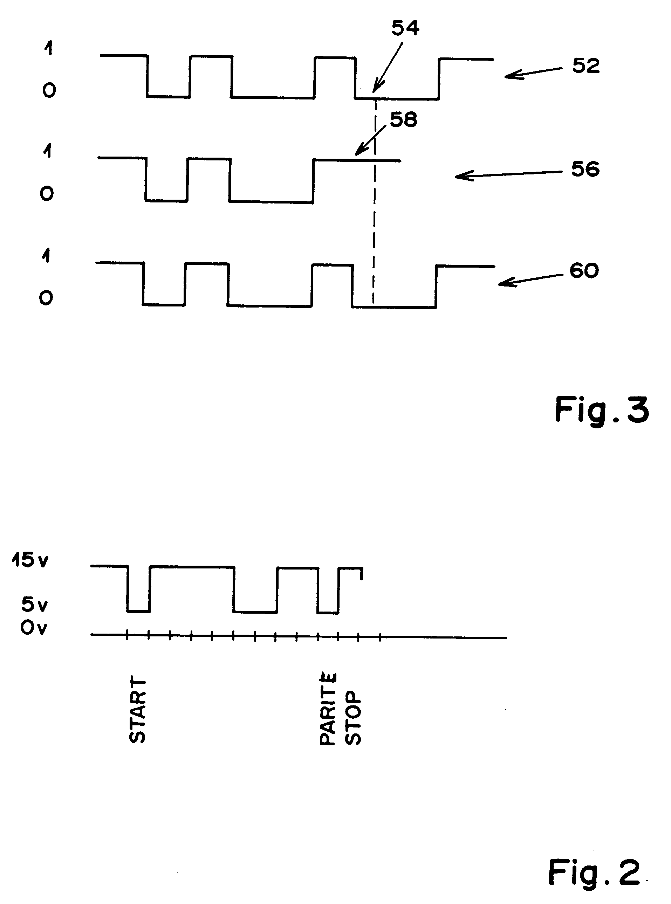

Chaque module 14,16,18 surveille en permanence la ligne, et il n'émet un message que si la ligne 10,12 est libre. Un bit à 0 correspondant à un court-circuit de la ligne 10,12, est prioritaire sur un bit à 1 correspondant au niveau d'alimentation des modules. En empêchant l'émission simultanée par plusieurs modules reliés par la ligne 10,12, on évite une altération des messages. Lorsque deux émetteurs constatant que la ligne 10,12 est libre décident simultanément d'émettre, la collision des deux messages perturbe la transmission. Le protocole de transmission confère dans ce cas une priorité à l'un des messages, cette priorité étant donnée au message qui émet le premier un 0 sur la ligne, alors que l'autre émet un bit à 1. Celà impose qu'un module en émission surveille en permanence l'état de la ligne, notamment lorsqu'il émet un bit à 1. Si à ce moment là il voit que la ligne 10,12 est forcée à l'état 0, c'est qu'un autre émetteur a démarré en même temps que lui. Celui qui émet en premier un 1, se retire dans ce cas, afin de ne pas perturber le message du module qui émet simultanément un 0. Le module qui s'est retiré continue à écouter la ligne et lorsque celle-ci est libre, il passe son message. En se référant à la figure 3, on voit que le message 52 émis par l'un des modules émet le premier un signal zéro 54, tandis que le message 56 émis par un autre module émet simultanément un signal haut 58. Ce dernier module émettant le premier un signal 1 se retire et le message transmis 60 correspond à celui illustré en 52. Le signal prioritaire 52 n'est pas perturbé par cette collision et il est inutile de le répéter. La collision est détectée par le comparateur 48 qui reçoit sur ses entrées les signaux reçus sur le port 38, et les signaux émis par le port 42 du microprocesseur 28. Lorsque le comparateur 48 détecte une discordance entre les signaux reçus et les signaux émis, il transmet au port 50 un signal de collision, et le microprocesseur détermine la priorité, et le cas échéant, la poursuite de l'émission ou l'interruption de celle-ci.

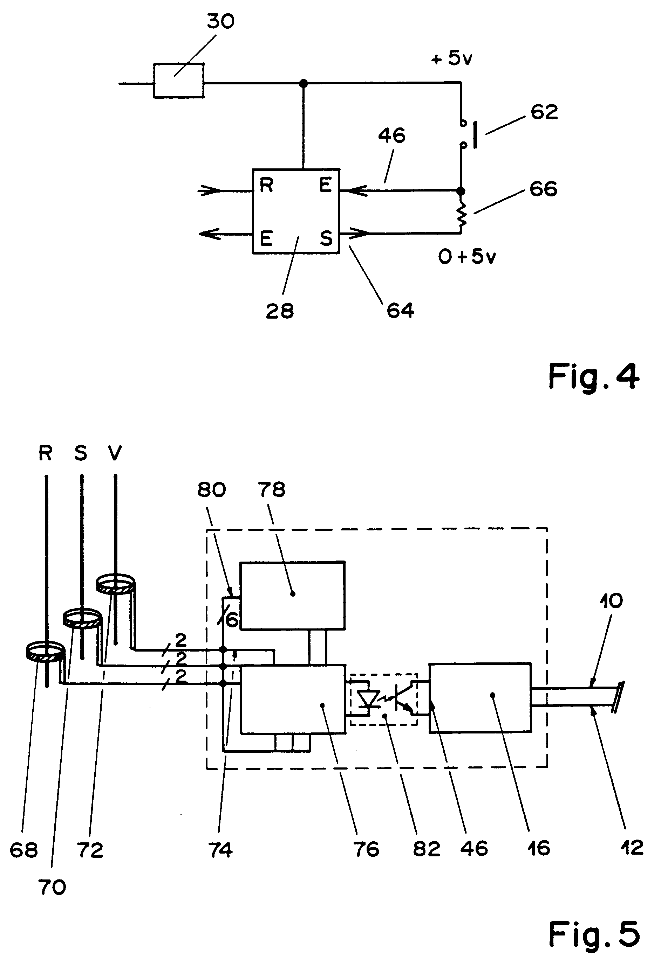

Les capteurs ou actionneurs schématiquement représentés par un contact 62 sur la figure 4 peuvent être alimentés par la ligne de transmission 10,12, auquel cas il est avantageux de réduire leur consommation d'énergie afin de ne pas surdimensionner le réseau de transmission. Le contact 62 est relié d'une part au bloc adaptateur 30, et d'autre part par l'intermédiaire d'une résistance 66 à une sortie 64 du microprocesseur 28. L'entrée 46 du microprocesseur est reliée au point de connexion entre la résistance 66 et le contact 62. En position ouvert du contact 62, l'entrée 46 reçoit un signal zéro, tandis que la fermeture du contact 62 porte l'entrée à un potentiel supérieur. Normalement la porte de sortie 64 est au potentiel élevé, par exemple de +5 Volts, et la fermeture ou l'ouverture du contact 62 ne provoque la circulation d'aucun courant, et de ce fait, la consommation d'énergie du capteur est nulle. Lorsque le microprocesseur décide une lecture du capteur 62, il porte le potentiel de la sortie 64 au niveau 0, provoquant un courant à travers la résistance 66, lorsque le contact 62 est fermé. Cette consommation d'énergie n'intervient que pendant le temps de lecture, le microprocesseur remettant la sortie 64 au potentiel élevé dès qu'il a enregistré le signal reçu sur l'entrée 46. La consommation d'énergie est ainsi réduite notablement.

Les capteurs ou actionneurs peuvent bien entendu comporter leur propre source d'alimentation, par exemple une source auxiliaire et cette solution est appropriée à des capteurs ou actionneurs coopérant avec le réseau d'alimentation électrique. L'actionneur peut être un contacteur de commande d'un moteur dont l'électro-aimant est alimenté par le réseau électrique en étant piloté par l'automate de gestion d'énergie. La figure 5 représente un capteur à source auxiliaire d'alimentation, plus particulièrement un dispositif de mesure de courant d'un réseau triphasé R,S,V. Un transformateur d'intensité en forme de tore 68,70,72 est associé à chaque phase R,S,V pour délivrer un signal proportionnel au courant circulant dans le conducteur de phase correspondant. Les signaux délivrés par les tores 68,70,72 sont transmis par des conducteurs 74 (trois fois deux fils) à un dispositif de traitement 76 à microprocesseur. Un bloc alimentation 78 du dispositif de traitement 76 reçoit son énergie des transformateurs de courant 68,70,72 par une connexion 80 (à six fils). La sortie du dispositif de traitement 76 est reliée par une liaison opto-électronique série 82, a l'entrée 46 du microprocesseur du module 16. Ce module 16 transmet par le réseau à deux fils 10,12 les données correspondant aux courants parcourant les phases R,S,V aux autres modules raccordés au réseau à deux fils.

L'énergie de traitement des signaux est ainsi prélevée sur le réseau triphasé R,S,V, tandis que le module 16 de transmission des données est alimenté par le réseau à deux fils 10,12, de la manière décrite ci-dessus. La liaison opto-électronique 82 isole la partie mesure associée au réseau triphasé R,S,V, de la partie transmission raccordée au réseau à deux fils 10,12. La transmission des données fonctionne même lors d'une disparition de la tension du réseau triphasé R,S,V. L'alimentation à propre courant du dispositif de mesure ne complique pas l'installation et permet une économie de l'énergie transmise par le réseau à deux fils 10,12. Un capteur du type illustré par la figure 5 peut télécommander un actionneur, par exemple un contacteur de protection d'un moteur alimenté par le réseau triphasé R,S,V. Les mesures et/ou ordres sont transmis par le réseau à deux fils 10,12 qui constitue la liaison entre le capteur et l'actionneur.

Les modules 14,16,18 sont de préférence d'un type standard, la personnalisation intervenant lors de l'élaboration de l'automate, plus particulièrement lors de l'affectation d'un module à une certaine fonction. Chaque module est programmé pour assurer la fonction qui lui est attribuée, et il dispose d'une certaine autonomie. L'unité centrale 15 de l'automate de gestion comporte des fonctions additionnelles, par exemple d'affichage ou de centralisation de données pour piloter l'ensemble de l'installation. Le bloc d'alimentation 19 peut bien entendu être séparé de l'unité centrale 15, ou certaines fonctions de l'unité centrale peuvent être dissociées de celle-ci, par exemple le dispositif d'affichage. La liaison par un réseau à deux fils 10,12 est particulièrement souple et permet une distribution quelconque des modules dans le bâtiment.

## Revendications

1. Automate de gestion technique de bâtiment ayant plusieurs modules (14,16,18) répartis dans le bâtiment, en particulier des modules capteurs, et/ou actionneurs (16,18) et un module (14) d'une unité centrale, reliés entre eux par un réseau symétrique à deux fils (10,12) de transmission de données binaires en mode asynchrone, caractérisé en ce que, chaque module comportant un émetteur et un récepteur de données, l'automate comprend un bloc d'alimentation (19) relié audit réseau à deux fils (10,12) pour alimenter en énergie lesdits modules (14,16,18) raccordés audit réseau, ledit bloc d'alimentation (19) comportant un générateur de tension limité en courant, les données binaires transmises par le réseau étant modulées à deux niveaux de tension électrique entre lesdits deux fils, le niveau bas de tension correspondant à une mise en court-circuit du réseau par l'un des modules (14, 16, 18) en émission et le niveau haut permettant l'alimentation en énergie des modules, chaque module (14, 16, 18) comportant un microprocesseur (28) de commande connecté à l'émetteur et au récepteur du module de manière à écouter en permanence les messages transmis par ledit réseau à deux fils (10, 12) et à empêcher toute émission lorsque le réseau n'est pas libre.

2. Automate selon la revendication 1, caractérisé en ce que chaque module dispose d'un dispositif d'accumulation d'énergie (34) suffisant à l'alimentation du module pendant les moments de mise en court-circuit du réseau (10,12).

3. Automate selon la revendication 1 ou 2, caractérisé en ce que ladite unité centrale (15) comprend ledit bloc d'alimentation (19).

4. Automate selon la revendication 1, 2 ou 3, caractérisé en ce que le standard de transmission asynchrone présente un état de repos correspondant au niveau d'alimentation des modules.

5. Automate selon la revendication 1, caractérisé en ce que chaque module (14,16,18) comprend un comparateur (48) pour comparer les signaux émis par son émetteur (42) et les signaux reçus par son récepteur (26,38), ledit comparateur commandant l'arrêt immédiat de l'émission lorsque le signal émis est au niveau haut et le signal reçu au niveau bas, de façon à ne pas perturber l'émission du module ayant imposé ledit niveau bas.

6. Automate selon l'une quelconque des revendications précédentes, caractérisé en ce que le module comporte un capteur et/ou actionneur (62) alimenté en courant par ledit réseau (10,12) et un microprocesseur (28) ayant une sortie (64) reliée audit capteur et/ou actionneur pour alimenter ce dernier uniquement pendant les périodes de lecture du capteur ou de commande de l'actionneur par le microprocesseur.

7. Automate selon l'une quelconque des revendications 1 à 5, caractérisé en ce que le module comporte un capteur et/ou un actionneur alimenté par une source auxiliaire (68,70,72) et un ensemble (16) de réception et d'émission alimenté par ledit réseau à deux fils (10,12).

8. Automate selon la revendication 7, caractérisé en ce que le module comporte un microprocesseur ayant une entrée reliée audit capteur par une liaison opto-électronique (82) et/ou une sortie reliée audit actionneur par une liaison opto-électronique d'isolation.

9. Automate selon l'une quelconque des revendications précédentes, caractérisé en ce que chaque message transmis sur le réseau comporte l'adresse du module auquel il est destiné.

## Claims

1. A controller for technical management of a building having several modules (14, 16, 18) located at different points in the building, in particular sensor and/or actuator modules (16, 18) and a central unit module (14) connected to one another by a symmetrical two-wire system (10, 12) for transmission of binary data in asynchronous mode, characterized in that, each module comprising a data transmitter and receiver, the controller comprises a power supply unit (19) connected to said two-wire system (10, 12) to supply power to said modules (14, 16, 18) connected to said system, said power supply unit (19) comprising a voltage generator limited in current, the binary data transmitted by the system being modulated to two electrical voltage levels between said two wires, the low voltage level corresponding to short-circuiting of the system by one of the modules (14, 16, 18) on transmission and the high level enabling the modules to be supplied with power, each module (14, 16, 18) comprising a controlling microprocessor (28) connected to the transmitter and receiver of the module so as to listen continuously to the messages transmitted by said two-wire system (10, 12) and to prevent any transmission when the system is not free.

2. The controller according to claim 1, characterized in that each module is provided with a power storage device (34) sufficient to supply power to the module during the moments when the system (10, 12) is short-circuited.

3. The controller according to claim 1 or 2, characterized in that said central unit (15) comprises said power supply unit (19).

4. The controller according to claim 1, 2 or 3, characterized in that the asynchronous transmission standard presents a rest state corresponding to the level of power supply to the modules.

5. The controller according to claim 1, characterized in that each module (14, 16, 18) comprises a comparator (48) to compare the signals sent by its transmitter (42) and the signals received by its receiver (26, 38), said comparator ordering immediate stopping of the transmission when the signal sent is at high level and the signal received at low level, in order not to disturb the transmission of the module which imposed said low level.

6. The controller according to any one of the above claims, characterized in that the module comprises a sensor and/or actuator (62) supplied with current by said system (10, 12) and a microprocessor (28) having an output (64) connected to said sensor and/or actuator to supply the latter only during the periods of sensor read or actuator control by the microprocessor.

7. The controller according to one of the claims 1 to 5, characterized in that the module comprises a sensor and/or actuator supplied by an auxiliary source (68, 70, 72) and a transceiver assembly (16) supplied by said two-wire system (10, 12).

8. The controller according to claim 7, characterized in that the module comprises a microprocessor having an input connected to said sensor by an opto-electronic link (82) and/or an output connected to said actuator by an opto-electronic isolating link.

9. The controller according to any one of the above claims, characterized in that each message transmitted on the system comprises the address of the module for which it is intended.

## Patentansprüche

1. Steuerung für ein Gebäudeleitsystem mit mehreren im Gebäude verteilten Modulen (14, 16, 18), insbesondere Meßwertgebermodulen und/oder Stellgliedmodulen (16, 18) sowie einem Zentraleinheitsmodul (14), die über ein symmetrisches Zweidrahtnetz (10,12) zur asynchronen Übertragung von binären Daten miteinander verbunden sind, dadurch gekennzeichnet, daß jedes Modul einen Datensender und einen Datenempfänger aufweist und die Steuerung einen an das genannte Zweidrahtnetz (10, 12) angeschlossenen Stromversorgungsblock (19) umfaßt, um die genannten an dieses Netz angeschlossenen Module (14, 16, 18) mit elektrischer Energie zu versorgen, wobei der Stromversorgungsblock (19) eine strombegrenzte Spannungsquelle umfaßt, die vom Netz übertragenen Binärdaten auf zwei zwischen den beiden genannten Drähten anliegende Spannungspegel moduliert werden, der niedrige Spannungspegel einem Kurzschließen des Netzes durch eines der Sendemodule (14, 16, 18) entspricht, der hohe Spannungspegel die Energieversorgung der Module ermöglicht und jedes Modul (14, 16, 18) einen mit dem Sender und dem Empfänger des Moduls verbundenen Mikroprozessor (28) aufweist, so daß die über das genannte Zweidrahtnetz (10, 12) übertragenen Informationen ununterbrochen abgefragt werden und jede Signalaussendung verhindert wird, wenn das Übertragungsnetz nicht frei ist.

2. Steuerung nach Anspruch 1, dadurch gekennzeichnet, daß jedes Modul über ein für seine Energieversorgung während der Zeitabschnitte mit kurzgeschlossenem Netz (10, 12) ausreichendes Energiespeichersystem (34) verfügt.

3. Steuerung nach Anspruch 1 oder 2, dadurch gekennzeichnet, daß die genannte Zentraleinheit (15) den genannten Energieversorgungsblock (19) umfaßt.

4. Steuerung nach Anspruch 1, 2 oder 3, dadurch gekennzeichnet, daß der asynchrone Übertragungsstandard einen Ruhezustand aufweist, der dem Spannungspegel für die Energieversorgung der Module entspricht.

5. Steuerung nach Anspruch 1, dadurch gekennzeichnet, daß jedes Modul (14, 16, 18) einen Komparator (48) zum Vergleich der vom Sender (42) des Moduls ausgesandten mit den vom Empfänger (26, 38) des Moduls empfangenen Signalen umfaßt, wobei der genannte Komparator die Signalaussendung unverzüglich unterbricht, wenn das ausgesandte Signal den hohen und das empfangene Signal den niedrigen Pegel führen, so daß die Signalaussendung des Moduls mit dem prioritären niedrigen Pegel störungsfrei erfolgt.

6. Steuerung nach irgendeinem der vorhergehenden Ansprüche, dadurch gekennzeichnet, daß das Modul einen Meßwertgeber und/oder ein Stellglied (62), die über das genannte Netz (10, 12) gespeist werden, sowie einen Mikroprozessor (28) mit einem Ausgang (64) umfaßt, der an den genannten Meßwertgeber und/oder das genannte Stellglied angeschlossen ist, um diese ausschließlich während des Zeitraums der durch den Mikroprozessor durchgeführten Abfrage des Meßwertgebers bzw. der Weitergabe des Steuerbefehls an das Stellglied mit Energie zu versorgen.

7. Steuerung nach einem der Ansprüche 1 bis 5, dadurch gekennzeichnet, daß das Modul einen Meßwertgeber und/oder ein Stellglied, die über eine Hilfsenergiequelle (68, 70, 72) gespeist werden, sowie eine über das genannte Zweidrahtnetz (10, 12) gespeiste Empfangs- und Sendeeinheit (16) umfaßt.

8. Steuerung nach Anspruch 7, dadurch gekennzeichnet, daß das Modul einen Mikroprozessor umfaßt, der einen über eine optoelektronische Verbindung (82) mit dem genannten Meßwertgeber verbundenen Eingang und/oder einen über eine isolierende optoelektronische Verbindung mit dem genannten Stellglied verbundenen Ausgang aufweist.

9. Steuerung nach irgendeinem der vorhergehenden Ansprüche, dadurch gekennzeichnet, daß jede über das Netz übertragene Information die Adresse des ihr zugeordneten Moduls enthält.
